# EUROPÄISCHE PATENTSCHRIFT

(11) **EP 2 088 027 B1**
(45) Veröffentlichungstag und Bekanntmachung des Hinweises auf die Patenterteilung: **27.02.2013**
(21) Anmeldenummer: 09006725.7
(22) Anmeldetag: 05.10.2007
(51) Int. Cl.: B60N 2/30, B64D 11/06, B60N 2/28

(54) **Flugzeugsitz**
Airplane seat
Siège d'avion

(30) Priorität: 06.10.2006 EP 06021009
(43) Veröffentlichungstag der Anmeldung: 12.08.2009
(62) Teilanmeldung aus: 07818737.4
(73) Patentinhaber: Lufthansa Technik AG, 22335 Hamburg (DE)
(72) Erfinder: Merensky, Harald, 22359 Hamburg (DE)
(74) Vertreter: Glawe, Delfs, Moll

(56) Entgegenhaltungen:
- WO-A-01/49518
- WO-A1-92/12024
- FR-A- 2 877 615
- US-A- 2 833 336
- US-A1- 2005 146 182
- US-B1- 6 769 735

## Beschreibung

Die Anmeldung betrifft einen Sitz für ein Verkehrsmittel, mit einer Sitzfläche und einer Rückenlehne. Der Sitz weist einen Reboard-Sitzbügel auf, der im unteren Bereich der Rückenlehne und/oder im Verbindungs-/Übergangsbereich von Rückenlehne und Sitzfläche schwenkbar gelagert ist. Wenigstens ein Teil des Polsters der Rückenlehne ist mit dem Reboard-Sitzbügel verbunden und mit diesem Sitzbügel verschwenkbar. Der Reboard-Sitzbügel ist in einem Stauzustand im Wesentlichen parallel zur Rückenlehne angeordnet. Aus dem Stauzustand kann der Reboard-Sitzbügel in einen Reboard-Nutzzustand verschwenkt werden, in dem er eine Winkelstellung zwischen den Ebenen der Rückenlehne und der Sitzfläche einnimmt. Im Reboard-Nutzzustand bildet der mit dem Reboard-Sitzbügel verbundene und mit diesem Sitzbügel verschwenkbare Teil des Polsters der Rückenlehne die Sitzfläche eines Reboard-Kindersitzes.

Die Erfindung betrifft ferner ein Sitzsystem für ein Verkehrsmittel. Das Sitzsystem umfasst einen Sitz mit einer Sitzfläche sowie einen ein Polster haltenden Reboard-Sitzbügel. Es ist eine lösbare Verbindung zwischen dem Reboard-Sitzbügel und dem Sitz vorgesehen, wobei der Reboard-Sitzbügel im verbundenen Zustand schwenkbar gegenüber dem Sitz gelagert ist. In einem Reboard-Nutzzustand ist der Reboard-Sitzbügel in einer gegenüber der Sitzfläche geneigten Stellung fixiert. Schließlich betrifft die Erfindung einen Reboard-Sitzbügel für ein solches Sitzsystem.

Mit einem Sitz bzw. einem Sitzsystem dieser Art können Kleinkinder in öffentlichen Verkehrsmitteln gut gesichert werden, siehe US 6,769,735 B1. Den Kindern wird ein besserer Schutz geboten, als ihn die Beckengurte herkömmlicher Sitze bieten können. Insbesondere in Flugzeugen ist es jedoch nicht erforderlich, dass das Kleinkind während der gesamten Dauer der Reise in dieser Weise gesichert ist. Genau wie bei Erwachsenen ist es vielmehr ausreichend, wenn das Kleinkind während des Starts, während der Landung und während Turbulenzen gesichert ist.

Ein Reboard-Sitzbügel ist auch aus WO 01/49518 A1 bekannt, welche den nächstliegenden Stand der Technik offenbart und den Oberbegriff des Anspruchs 1 zeigt.

Der Erfindung liegt die Aufgabe zugrunde einen Reboard-Sitzbügel der eingangs genannten Art vorzustellen, der eine größere Flexibilität in Phasen der Reise bietet, in denen eine besondere Sicherung des Kleinkinds nicht erforderlich ist. Dies wird erreicht mit den Merkmalen des Anspruchs 1.

Der erfindungsgemäße Sitz zeichnet sich zunächst dadurch aus, dass der mit dem Reboard-Sitzbügel verbundene und mit diesem Sitzbügel verschwenkbare Teil des Polsters der Rückenlehne die Sitzfläche eines Reboard-Kindersitzes bildet. Ein oberer Teil des Polsters ist schwenkbar mit einem oberen Bereich des Reboard-Sitzbügels verbunden. Die beiden Teile des Polsters sind schwenkbar miteinander verbunden und der untere Teil des Polsters ist verschieblich mit dem unteren Bereich des Reboard-Sitzbügels verbunden. Der Reboard-Sitzbügel kann ferner in einen Liegezustand verschwenkt werden, in dem er im Wesentlichen parallel zur Sitzfläche angeordnet ist.

Zunächst seien einige im Rahmen der Erfindung verwendete Begriffe erläutert.

Der Begriff Reboard-Sitz bezeichnet einen Sitz, in dem kleine Kinder (vorzugsweise unter zwei Jahren) entgegen der üblichen Sitzrichtung transportiert werden können.

Der erfindungsgemäße Sitz weist einen integrierten Reboard-Kindersitz auf. Zu diesem Zweck ist ein Reboard-Sitzbügel vorgesehen, der diesen Reboard-Kindersitz trägt. Er ist im unteren Bereich der Rückenlehne oder im Verbindungs/Übergangsbereich von Rückenlehne und Sitzfläche schwenkbar gelagert. Die Schwenkbarkeit ist so ausgebildet, dass er von einen Stauzustand, in dem er im Wesentlichen parallel zur Rückenlehne angeordnet ist, in einen Reboard-Nutzzustand verschwenkbar ist, in dem die Ebene des Reboard-Sitzbügels zwischen den Ebenen der Rückenlehne und der Sitzfläche liegt. Im Stauzustand kann der Reboard-Sitzbügel beispielsweise den Rahmen der Rückenlehne bilden.

Das Rückenlehnenpolster oder wenigstens ein Teil davon ist mit dem Reboard-Sitzbügel verbunden und gemeinsam mit ihm verschwenkbar. Im Reboard-Nutzzustand bildet dieser Teil des Polsters die Sitzfläche eines Reboard-Kindersitzes.

Im Reboard-Nutzzustand bildet somit der verschwenkte Reboard-Sitzbügel den Rahmen eines Reboard-Kindersitzes. An diesem Rahmen ist der verschwenkbare Teil des Polsters der Rückenlehne als Sitzfläche befestigt. Im Rahmen der Erfindung ist es möglich, dass die Befestigung des verschwenkbaren Teils des Polsters der Rückenlehne ausschließlich am Reboard-Sitzbügel oder aber zusätzlich im unteren Bereich, am Sitz, insbesondere an dessen Rückenlehne, erfolgt.

Der Reboard-Sitzbügel soll im Stauzustand den Sitzkomfort für einen erwachsenen Passagier nicht oder allenfalls unwesentlich beeinträchtigen. Zu diesem Zweck kann vorgesehen sein, dass der Reboard-Sitzbügel im Stauzustand im Randbereich der Rückenlehne angeordnet ist oder die Rückenlehne seitlich sowie am oberen Rand umschließt. Er verläuft dann nicht durch den gepolsterten Bereich der Rückenlehne. Alternativ kann vorgesehen sein, dass der Reboard-Sitzbügel (insbesondere dessen oberer Rand) so tief in einer Aussparung der Rückenlehnenpolster versenkt wird, dass er den Sitzkomfort nicht beeinträchtigt.

Der Reboard-Sitzbügel ist vorzugsweise im Wesentlichen U-förmig ausgebildet. Bei einem Draufblick auf den Sitz weist er die Form eines umgedrehten U auf. Die beiden langen Schenkel des U sind im Seitenbereich der Rückenlehne angeordnet, der Boden des U im Bereich des oberen Randes der Rückenlehne.

Der Reboard-Sitzbügel ist zusätzlich in einen Liegezustand verschwenkbar, in dem er im Wesentlichen parallel zur Sitzfläche angeordnet ist. In diesem Liegezustand verlängert der verschwenkbare Teil des Polsters der Rückenlehne die Sitzfläche des Sitzes weiter nach vorne. Wenn eine Sicherung von Babys und Kleinkindern nicht mehr erforderlich ist (beispielsweise nach Erreichen der Reiseflughöhe eines Flugzeugs), kann durch Verschwenken in den Liegezustand eine flache Liegefläche gebildet werden.

Der Reboard-Sitzbügel muss in der vorgesehen Winkelstellung des Reboard-Nutzzustands fixiert werden. Dies kann dadurch geschehen, dass sich der Reboard-Sitzbügel im Reboard-Nutzzustand auf den Armlehnen des Sitzes und/oder mit den Armlehnen des Sitzes verbundene Halteeinrichtungen abstützt. Beispielsweise können nach innen aus den Armlehnen hervorfahrbare Bolzen vorgesehen sein, die eine Auflagefläche für den Reboard-Sitzbügel bilden.

Der mit dem Reboard-Sitzbügel verschwenkbare Teil des Polsters der Rückenlehne ist vorzugsweise beidseitig gepolstert. Im Stauzustand des Reboard-Sitzbügels kann die dann von der Rückenlehne wegweisende Seite dieses Polsters als Rückenlehnenpolster für Erwachsene oder größere Kinder genutzt werden. Im Reboard-Nutzzustand sowie im Liegezustand wird die gegenüberliegende Seite des Polsters der Rückenlehne als Sitzfläche eines Reboard-Kindersitzes beziehungsweise als Liegefläche genutzt.

Der mit dem Reboard-Sitzbügel verschwenkbare Teil des Polsters weist vorzugsweise einen im Wesentlichen starren Kern auf. "Im Wesentlichen starr" bedeutet in diesem Zusammenhand, dass das Polster im Reboard-Nutzzustand hinreichend formstabil ist, um eine Sitzfläche für Babys und Kleinkinder zu bilden.

Der mit dem Reboard-Sitzbügel verschwenkbare Teil des Polsters der Rückenlehne ist zweiteilig ausgebildet. Die beiden Teile des Polsters sind schwenkbar miteinander verbunden. "Schwenkbar" bedeutet in diesem Zusammenhang eine Gelenkverbindung oder einfach eine flexible Verbindung der beiden Polsterteile. Es kann hier beispielsweise ein Materialabschnitt vorgesehen sein, der weniger starr ist als die übrigen Bereiche des Polsters. Der obere Teil dieses zweiteilig ausgebildeten Polsters ist mit einem oberen Bereich des Reboard-Sitzbügels schwenkbar verbunden. Der untere Teil des Polsters ist verschieblich mit dem unteren Bereich des Reboard-Sitzbügels verbunden. Beispielsweise kann er mittels geeigneter Führungen in Langlöchern des Reboard-Sitzbügels verfahrbar und gegebenenfalls in verschiedenen Stellungen fixierbar sein.

Im Stauzustand bilden die beiden Teile des Polsters vorzugsweise eine einheitliche Rückenlehne, sind also nicht oder kaum gegeneinander verschwenkt. Im Reboard-Nutzzustand werden die beiden Teile gegeneinander verschwenkt und der untere Bereich des unteren Teils des Polsters am Reboard-Sitzbügel nach oben gefahren, so dass sich eine Reboard-Sitzmulde ausbildet.

Der Reboard-Sitzbügel kann zusätzlich einen ausfahrbaren Sichtschutz aufweisen. Dieser kann beispielsweise aus einem Stoff gebildet sein und einen oder mehrere entsprechende verstellbare Spannbügel aufweisen. Er kann insbesondere im Liegezustand verwendet werden und im Kindersitz befindliche Kinder vor optischen Einflüssen und Zugluft schützen.

Erfindungsgemäß ist es bevorzugt, dass der Reboard-Sitzbügel und/oder der mit dem Reboard-Sitzbügel verschwenkbare Teil des Polsters der Rückenlehne Fixiervorrichtungen für einen Beckengurt des Sitzes aufweisen. Bei dieser Ausführungsform der Erfindung kann ein wesentlicher Teil der auf den Reboard-Sitz wirkenden Kräfte beim Bremsen des Verkehrsmittels oder im Falle eines Unfalls über den Gurt in das Sitzgestell abgeleitet werden.

Vorzugsweise ist die Länge der Sitzfläche des Sitzes verstellbar. Auf diese Art und Weise ist eine Anpassung an die Oberschenkellänge des Passagiers möglich. Vorzugsweise weist der Sitz Armlehnen auf, deren Abstand zueinander verstellbar ist. Durch Vermindern des Abstands der Armlehnen kann der Sitz für kleinere Kinder "enger" gemacht werden. Ferner kann auch die Höhe der Armlehnen einstellbar sein.

In einer vorteilhaften Ausführungsform umfasst der Sitz zusätzlich zu einer Armlehne eine Kinderarmlehne. Zusätzlich umfassen bedeutet, dass die Armauflagefläche der Kinderarmlehne eine andere ist als die Armauflagefläche der Armlehne. Die Kinderarmlehne kann eine Staustellung und eine Nutzstellung einnehmen. In der Staustellung ist die Kinderarmlehne in die Kontur der Armlehne einbezogen, die Kinderarmlehne ragt also in seitlicher Richtung im Wesentlichen nicht über die Armauflagefläche der Armlehne hinaus. In der Nutzstellung hat die Kinderarmlehne in vertikaler Richtung einen verminderten Abstand zur Sitzfläche und in horizontaler Richtung einen verminderten Abstand zur gegenüberliegenden Armlehne. Vermindert ist der Abstand jeweils im Vergleich zur Armauflagefläche der Armlehne.

Es sind verschiedene Mechanismen denkbar, mittels derer die Kinderarmlehne zwischen dem Nutzzustand und dem Stauzustand wechselt. Möglich ist es beispielsweise, dass die Kinderarmlehne entlang von Führungsschienen in die Armlehne eingeschoben wird. In einer vorteilhaften Ausführungsform wird die Kinderarmlehne zum Wechseln zwischen dem Nutzzustand und dem Stauzustand um eine zur Armlehne paralle Achse geschwenkt.

Es kann ein mit einem Metallelement zusammenwirkender Magnet vorgesehen sein, um die Kinderarmlehne im Stauzustand zu halten. Ein solcher Verschluss ist verschleißfrei. Um die Kinderarmlehne aus dem Stauzustand zu lösen, muss die Magnetkraft überwunden werden. Es kann dazu ein Handgriff an der Kinderarmlehne vorgesehen sein, an dem die Bedienperson direkt im Stauzustand angreifen kann. Optisch ansprechender ist es jedoch, wenn sich die Kinderarmlehne im Stauzustand möglichst glattflächig in die Armlehne einfügt. Um den Magneten dennoch lösen zu können, wird die Kinderarmlehne zunächst in einen Zwischenzustand zwischen dem Stauzustand und dem Nutzustand gebracht, in dem die Kinderarmlehne hintergriffen werden kann.

Der erfindungsgemäße Sitz kann beispielsweise in Flugzeugen, Bussen oder Bahnen verwendet werden.

Das erfindungsgemäße Sitzsystem zeichnet sich dadurch aus, dass das Polster einen oberen und einen unteren Teil umfasst, wobei der obere Teil des Polsters schwenkbar mit einem oberen Bereich des Reboard-Sitzbügels verbunden ist, wobei die beiden Teile des Polsters schwenkbar miteinander verbunden sind und wobei der untere Teil des Polsters verschieblich mit dem unteren Bereich des Reboard-Sitzbügels verbunden ist. Beispielsweise kann er mittels geeigneter Führungen in Langlöchern des Reboard-Sitzbügels verfahrbar und gegebenenfalls in verschiedenen Stellungen fixierbar sein. Ferner ist der Reboard-Sitzbügel in einen Liegezustand verschwenkbar, in dem er im Wesentlichen parallel zur Sitzfläche angeordnet ist.

Bei dem zuvor beschriebenen erfindungsgemäßen Sitz ist der Reboard-Sitzbügel fest mit dem Sitz verbunden. Im Stauzustand ist der Reboard-Sitzbügel so angeordnet, dass man auf dem Sitz ohne größere Komforteinbußen sitzen kann. Geringfügige Komforteinbußen lassen sich jedoch nicht vermeiden. Bei gehobenen Komfortansprüchen können auch diese geringfügigen Beeinträchtigungen nicht akzeptiert werden.

Bei dem erfindungsgemäßen Sitzsystem ist der Erfindungsgedanke in einer Weise verwirklicht, in der der Sitz ohne Einschränkungen verwendet werden kann, wenn der Reboard-Sitz nicht genutzt wird. Der Reboard-Sitzbügel ist ein separates Teil, das nur bei Bedarf dann mit dem Sitz verbunden wird. Für die übrige Zeit wird der Reboard-Sitzbügel an anderer Stelle verstaut.

Um das Kind zu sichern, wird der Reboard-Sitzbügel in den Reboard-Nutzzustand gebracht, in dem er mit seinem unteren Ende mit dem Sitz verbunden ist und so gegenüber dem Sitz fixiert ist, dass er gegenüber der Sitzfläche geneigt ist.

Im Reboard-Nutzzustand ist das von dem Reboard-Sitzbügel gehaltene Polster so mit dem Reboard-Sitzbügel bzw. mit geeigneten Elementen des Sitzes verbunden, dass eine Sitzmulde entsteht. In diese Sitzmulde kann das Kleinkind gesetzt werden und mit Gurten gesichert werden. Um den Reboard-Sitzbügel vom Reboard-Nutzzustand in den Liegezustand zu bringen, wird der untere Teil des Polsters gegenüber dem Reboard-Sitzbügel verschoben, so dass das Polster im Wesentlichen parallel zum Reboard-Sitzbügel ausgerichtet sind. Der Reboard-Sitzbügel wird so geschwenkt, dass er im Wesentlichen parallel zur Sitzfläche ausgerichtet ist. Das Polster bildet dann eine ebene Fläche, auf der das Kleinkind liegen kann.

Das Schwenklager zwischen dem Reboard-Sitzbügel und dem Sitz kann Bestandteil des Sitzes oder Bestandteil des Reboard-Sitzbügels sein. Möglich ist es aber auch, dass die Verbindung zwischen dem Reboard-Sitzbügel und dem Sitz zugleich das Schwenklager bildet. Beispielsweise kann das Schwenklager einen in einer Lagerschale geführten Lagerbolzen umfassen. Beim Verbinden des Reboard-Sitzbügels mit dem Sitz wird der Lagerbolzen in die Lagerschale eingeführt, zum Trennen wird der Lagerbolzen aus der Lagerschale herausgezogen.

Um im Reboard-Nutzzustand ein Schwenken des Reboard-Sitzbügels gegenüber dem Sitz zu verhindern, ist ein Halteelement vorgesehen. Das Haltemittel kann so ausgelegt sein, dass es die Kraft auf einen Bestandteil des Sitzes oder auf ein sonstiges in fester räumlicher Beziehung zu dem Sitz stehendes Element überträgt. In einer vorteilhaften Ausführungsform wird die Kraft auf eine Armlehne des Sitzes übergeleitet. Das Halteelement kann sich in geeigneter Weise auf der Armlehne oder einem mit der Armlehne verbundenen Element abstützen. Ein sicherer Halt kann erreicht werden, wenn das Halteelement eine Haltebohrung und einen in die Haltebohrung einführbaren Haltebolzen umfasst.

Der Reboard-Sitzbügel des Sitzsystems ist ein eigenständiger Erfindungsgegenstand. Der Reboard-Sitzbügel und der Sitz des erfindungsgemäßen Sitzsystems können mit weiteren Merkmalen kombiniert werden, die im Zusammenhang mit dem erfindungsgemäßen Sitz detailliert beschrieben sind.

Der erfindungsgemäße Sitz bzw. das erfindungsgemäße Sitzsystem werden vorzugsweise neben einem üblichen Sitz angeordnet. Ein auf dem üblichen Sitz sitzender Erwachsener kann dann während der Reise ein in dem Reboard-Sitzbügel untergebrachtes Kind betreuen. Für den häufigen Fall, dass ein Erwachsener mit zwei Kindern reist, kann auch auf der anderen Seite des üblichen Sitzes ein Sitz angeordnet sein, der in einem seiner Zustände für Kinder bestimmt ist. Letzterer Sitz kann einen Reboard-Sitzbügel umfassen, er kann aber auch auf andere Weise an Kinder angepasst sein.

Ein Ausführungsbeispiel der Erfindung wird im Folgenden anhand der Zeichnungen beschrieben. Darin zeigen:
- Fig. 1: schematisch einen erfindungsgemäßen Sitz von der Seite, bei dem der Reboard-Sitzbügel in der Rebo- ard-Nutzstellung ist;
- Fig. 2: eine entsprechende Ansicht des Sitzes von vorne;
- Fig. 3: einen erfindungsgemäßen Sitz mit dem Reboard- Sitzbügel im Stauzustand;
- Fig. 4-6: Ansichten des Sitzes mit unterschiedlicher Länge der Sitzfläche angepasst an die Oberschenkellänge der Benutzer;
- Fig. 7: die Benutzung des Sitzes im Reboard-Nutzzustand;
- Fig. 8: den Reboard-Sitz im Liegezustand;
- Fig. 9: eine Ansicht des Sitzes von oben mit einem Schnitt durch die Rückenlehne (Reboard-Sitzbügel in Staustellung);

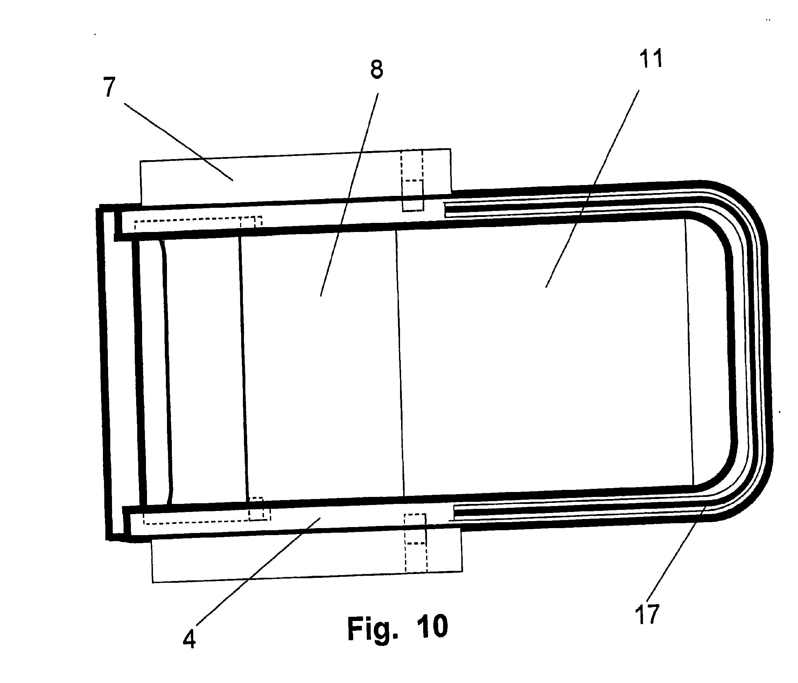

- Fig. 10: eine Ansicht des Sitzes von oben (Reboard- Sitzbügel in Reboard-Nutzstellung);
- Fig. 11: zwei erfindungsgemäße Sitze mit Kinderarmlehnen;
- Fig. 12: eine Armlehne mit einer Kinderarmlehne im Stauzu- stand;
- Fig. 13: eine Armlehne mit einer Kinderarmlehne im Nutzzu- stand;
- Fig. 14: die Armlehne aus Fig. 12 in einer Seitenansicht;
- Fig. 15: ein erfindungsgemäßes Sitzsystem im Reboard- Nutzzustand;
- Fig. 16: das Sitzsystem aus Fig. 15 im Liegezustand;
- Fig. 17: das Sitzsystem aus Fig. 15 und 16 in einer An- sicht von oben;
- Fig. 18: einen Reboard-Sitzbügel eines erfindungsgemäßen Sitzsystems in einer Ansicht von oben; und
- Fig. 19: den Reboard-Sitzbügel aus Fig. 18 in einer Sei- tenansicht.

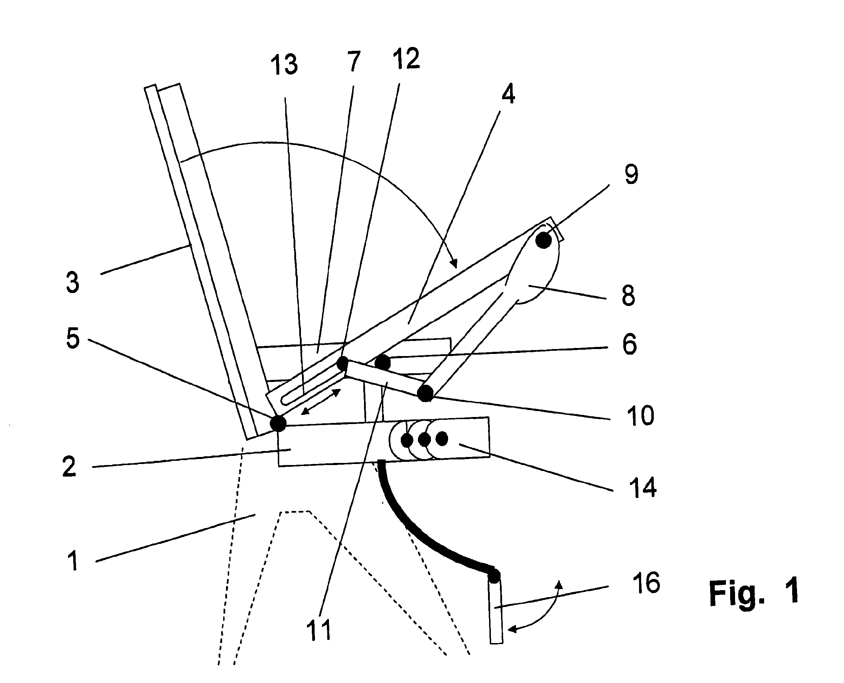

Der in Fig. 1 dargestellte Sitz weist ein bei 1 angedeutetes Grundgestell auf, mit dem er am Boden der Flugzeugkabine befestigt ist. Auf diesem Grundgestell 1 ist eine Sitzfläche 2 und eine Rückenlehne 3 angeordnet.

Die Rückenlehne 3 ist gegenüber der Sitzfläche 2 in bekannter Weise in der Neigung verstellbar.

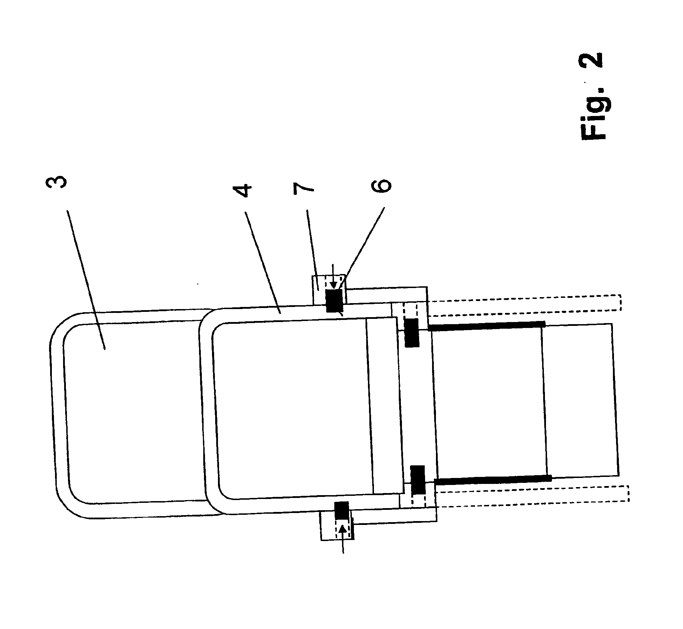

Ein Reboard-Sitzbügel 4 ist bei 5 (im Verbindungsbereich von Sitzfläche 2 und Rückenlehne 3) schwenkbar befestigt. In der in Fig. 1 gezeigten Darstellung befindet sich der Reboard-Sitzbügel 4 in der Reboard-Nutzstellung. Dabei stützt er sich auf verschieblichen Stützstiften 6 ab, die aus den Armlehnen 7 herausgefahren werden können (siehe Fig. 2).

In dem von dem U-förmigen Reboard-Sitzbügel 4 eingeschlossenen Innenraum ist ein zweiteiliges Polster angeordnet. Der obere Polsterteil 8 ist im oberen Bereich des Reboard-Sitzbügels 4 bei 9 schwenkbar befestigt. An dem oberen Polsterteil 8 ist bei 10 ein unterer Polsterteil 11 schwenkbar befestigt. Das entgegengesetzte (untere) Ende des unteren Polsterteils 11 ist bei 12 in einem Langloch 13 des Reboard-Sitzbügels 4 verschieblich gelagert.

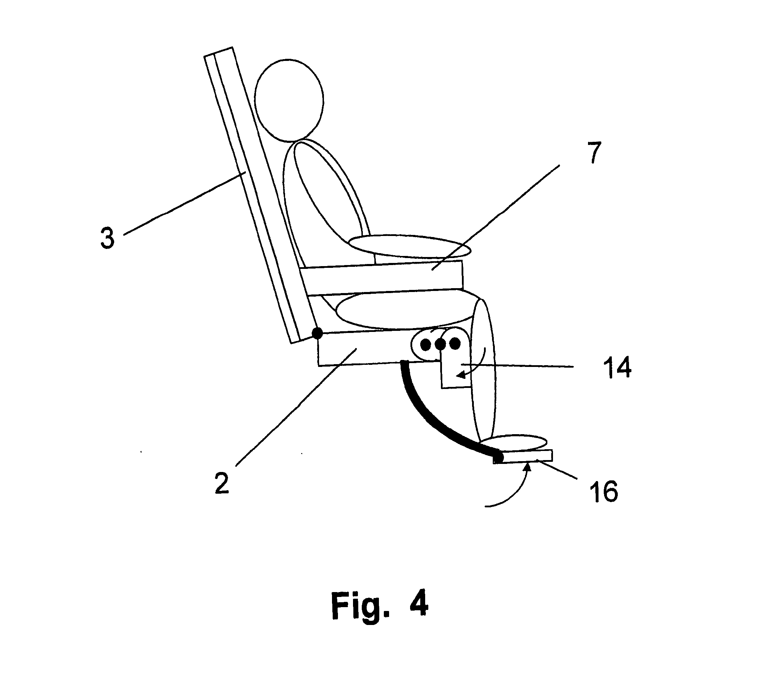

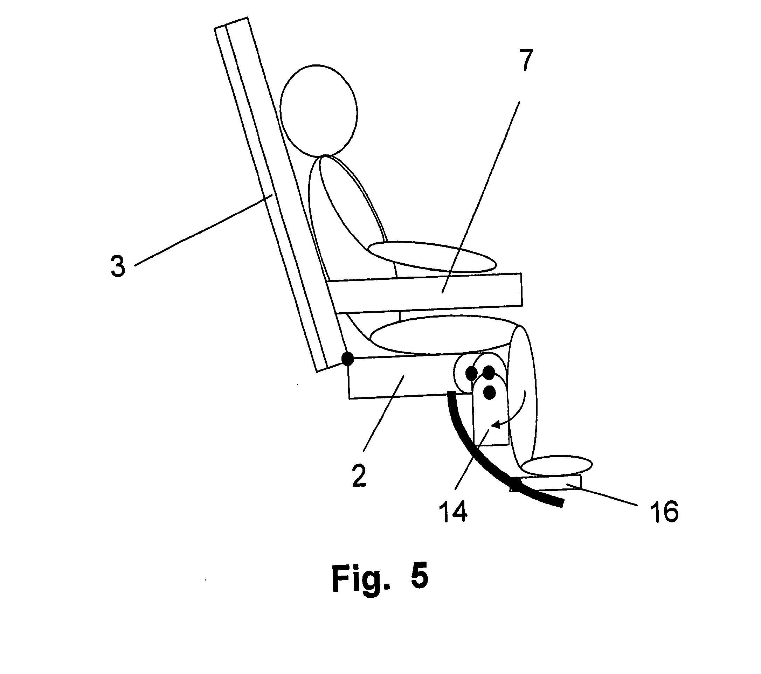

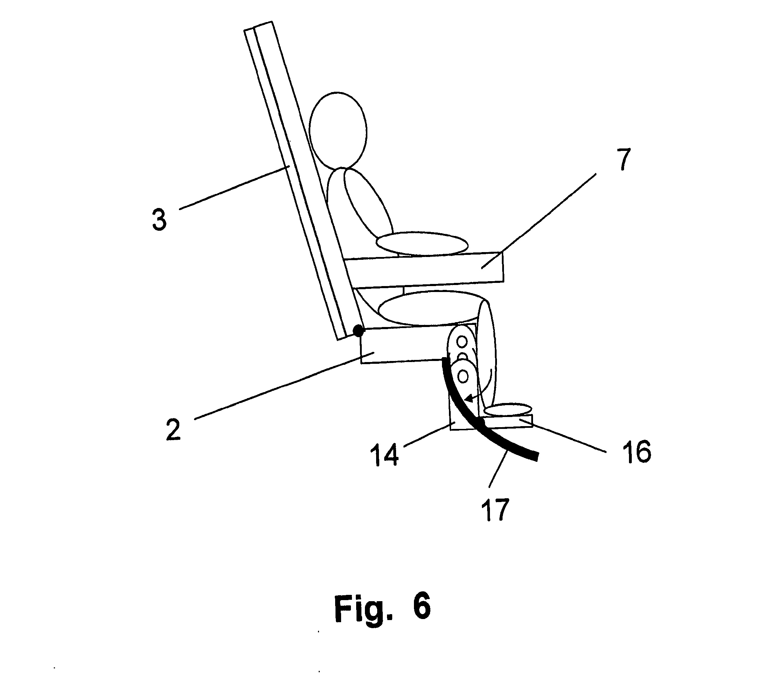

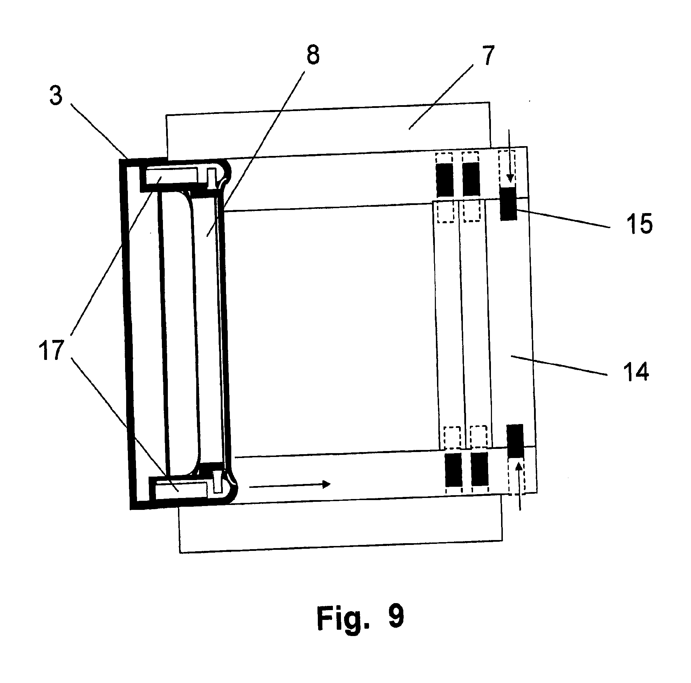

Die Länge der Sitzfläche 2 ist wie bei 14 angedeutet in der Länge veränderlich. Zu diesem Zweck können vordere Teilabschnitte der Sitzfläche 2 durch entsprechende Verriegelungsstifte 15 (siehe Fig. 9) ver- beziehungsweise entriegelt und im entriegelten Zustand nach unten zur Verkürzung der Sitzfläche abgeklappt werden. In den Fig. 4 bis 6 ist erkennbar, wie auf diese Art und Weise die Sitzfläche sukzessive abhängig von der Körpergröße des Passagiers verkürzt werden kann.

Der Sitz weist zusätzlich eine bei 16 schematisch dargestellte Fußstütze auf.

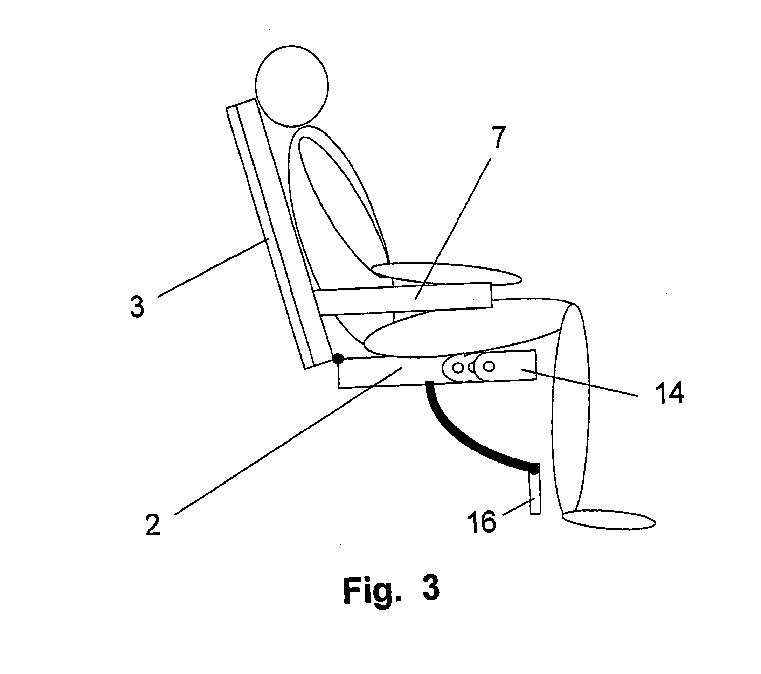

Die Fig. 3 bis 6 zeigen schematisch, wie der erfindungsgemäße Sitz in herkömmlicher Weise mit dem Reboard-Sitzbügel in der Staustellung genutzt werden kann. Fig. 3 zeigt die Nutzung durch einen Erwachsenen mit einer Körpergröße von 1,75 m, die Fig. 4 bis 6 die Nutzung durch Kinder mit Körpergrößen von 1,16 m, 1,04 m beziehungsweise 0,92 m. Es handelt sich hier um die statistischen Durchschnittsgrößen, von sechs-, vier- beziehungsweise zweijährigen Kindern. Dabei ist es möglich, die Armlehnen 7 nach innen zu verschieben und damit ihren Abstand zu verringern, um den Sitz bei der Nutzung durch Kinder zu verengen.

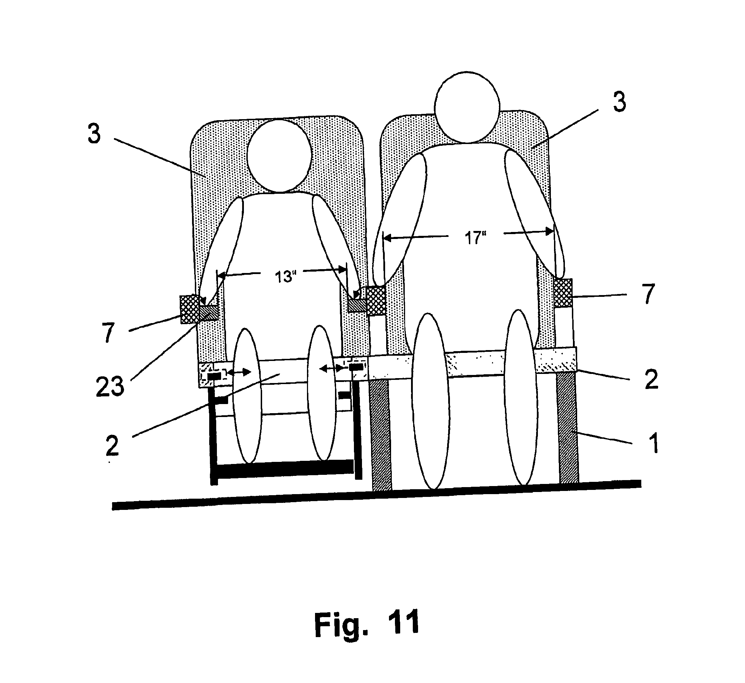

In den Figuren 11 bis 14 wird eine für Kinder bequeme Position der Armlehnen dadurch erreicht, dass die Armlehnen 7 des Sitzes 2, 3 zusätzliche Kinderarmlehnen 23 umfassen. Bei dem in Fig. 11 rechts dargestellten Sitz 2, 3 sind die Kinderarmlehnen im Stauzustand und deswegen nicht sichtbar. Die Armlehnen 7 sind so zueinander und zu der Sitzfläche 2 beabstandet, dass ein Erwachsener bequem sitzen kann. Bei dem in Fig. 11 links dargestellten Sitz sind die Kinderarmlehnen 23 im Nutzzustand. Die Kinderarmlehnen 23 sind so zueinander und zu der Sitzfläche 2 beabstandet, dass ein Kind bequem sitzen kann.

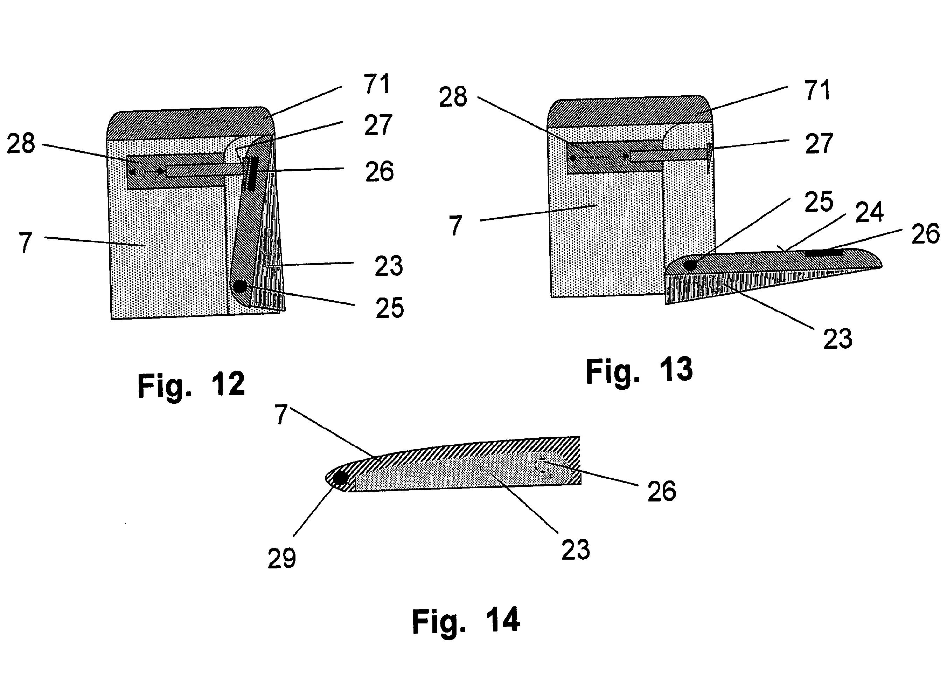

Im Stauzustand ist die Kinderarmlehne 23 gemäß Fig. 12 in die Kontur der Armlehne 7 einbezogen. Die Kinderarmlehne 23 ragt also zur Seite hin im Wesentlichen nicht über die Armauflagefläche 71 der Armlehne 7 hinaus. Die Kinderarmlehne 23 wird um eine Achse 25 geschwenkt, um sie in die Fig. 13 gezeigte Nutzstellung zu bringen. Das Kind kann seine Arme auf der Armauflagefläche 24 ablegen.

Die Kinderarmlehne 23 wird durch einen Magneten 26, der mit einem Metallteil 27 zusammenwirkt in der Staustellung gehalten. Das Metallteil 27 ist an einem Mechanismus 28 angebracht, der zwei Stellungen einnehmen kann. In der in Fig. 12 gezeigten Stellung hält der Mechanismus 28 die Kinderarmlehne 23 so, dass sie bündig mit der Armlehne 7 abschließt. In der in Fig. 13 gezeigten Stellung hält der Mechanismus die Kinderarmlehne 23 in einer Zwischenstellung, so dass sie hintergriffen werden kann, um den Magnet 26 von dem Metallteil 27 zu lösen. Um den Mechanismus von der einen Stellung in die andere zu bringen, wird jeweils über die Kinderarmlehne 23 ein Druckimpuls auf das Metallteil 27 ausgeübt. Über den Betätigungsknopf 29 kann die Neigung der Rückenlehne 3 verändert werden.

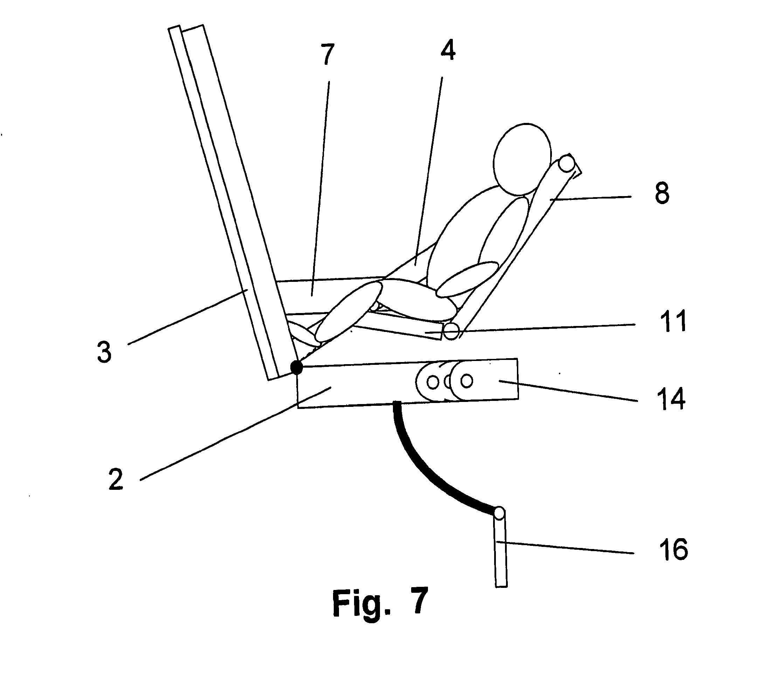

Wenn der Sitz für kleinere Kinder genutzt werden soll, wird er in die sogenannte Reboard-Nutzstellung gebracht. Zu diesem Zweck wird der Reboard-Sitzbügel 4 nach unten geklappt. Aus den Armlehnen 7 werden Haltestifte 6 ausgefahren, auf denen der Reboard-Sitzbügel 4 in der in Fig. 1 gezeigten Winkelstellung aufliegt. Anschließend werden die beiden Polsterteile 8, 11 aus der Ebene des Reboard-Sitzbügels 4 nach unten herausgeschwenkt, bis sie die in Fig. 1 gezeigte Endstellung einnehmen. Die untere Befestigung 12 des Sitzpolsters 11 gleitet dabei in den Langlöchern 13 nach oben. Die beiden Polsterteile 8, 11 bilden jetzt zusammen eine Reboard-Sitzschale, in der Babys oder Kleinkinder sicher sitzen können (siehe Fig. 7). Dabei ist vorgesehen, dass die Kinder in der Sitzschale durch einen Gurt 22 gesichert werden. Zusätzlich ist es vorgesehen, dass der Beckengurt des Sitzes um die durch die Polsterteile 8, 11 gebildete Sitzschale herumgeführt wird (in der Zeichnung nicht dargestellt), um bei Bremsvorgängen beziehungsweise Unfällen auftretende Beschleunigungskräfte aufzunehmen und in das Grundgestell des Sitzes abzuleiten.

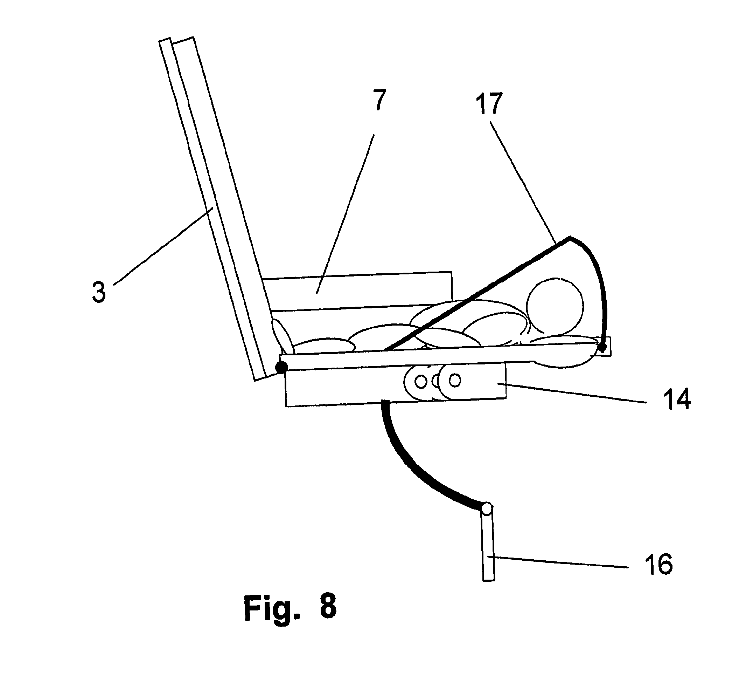

Nach Erreichen der Reiseflughöhe ist eine Sicherung von Babys und Kleinkindern wie bei Start und Landung nicht mehr erforderlich. Der Reboard-Sitzbügel kann dann in die in Fig. 8 gezeigte Liegestellung gebracht werden, in der er flach auf der Sitzfläche 2 aufliegt. Die Polsterteile 8, 11 werden dann wieder in die Ebene des Reboard-Sitzbügels 4 zurückbewegt und bilden eine einheitliche gerade Liegefläche für das Kind, deren Länge größer ist als die Länge der Sitzfläche 2 (siehe Fig. 8). Aus dem Reboard-Sitzbügel 4 kann ein Sichtschutz 17 ausgefahren werden, der Schutz gegen optische Einflüsse sowie Zugluft bieten kann.

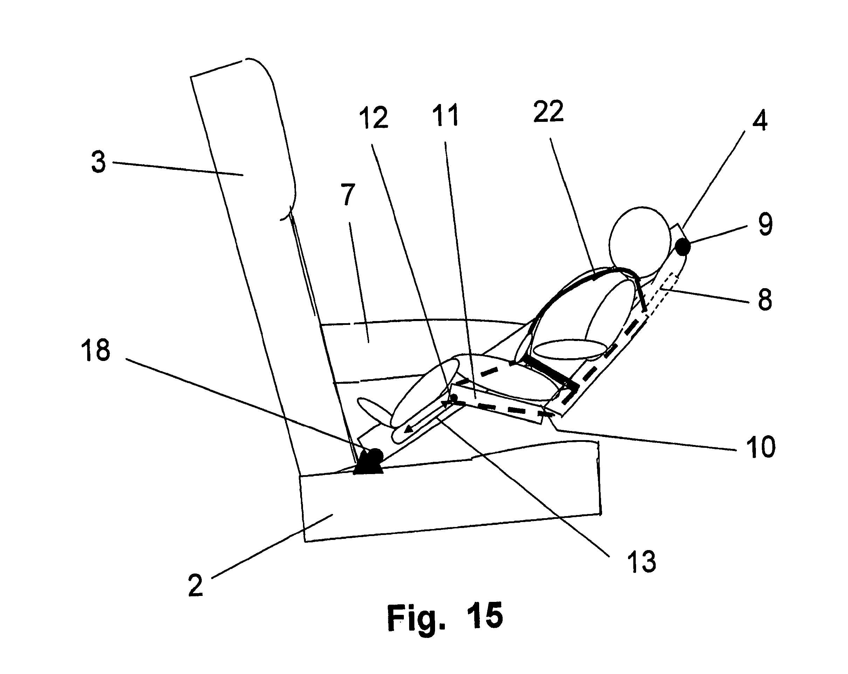

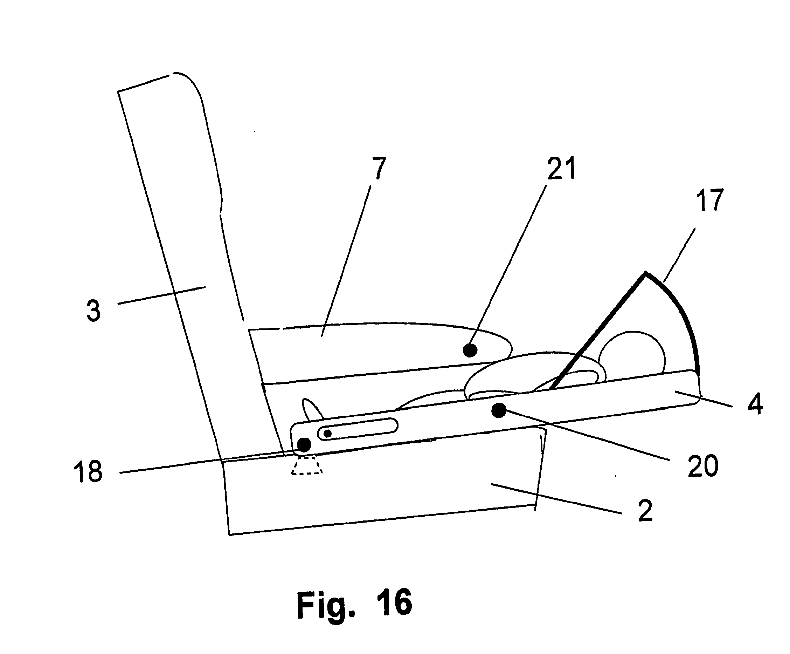

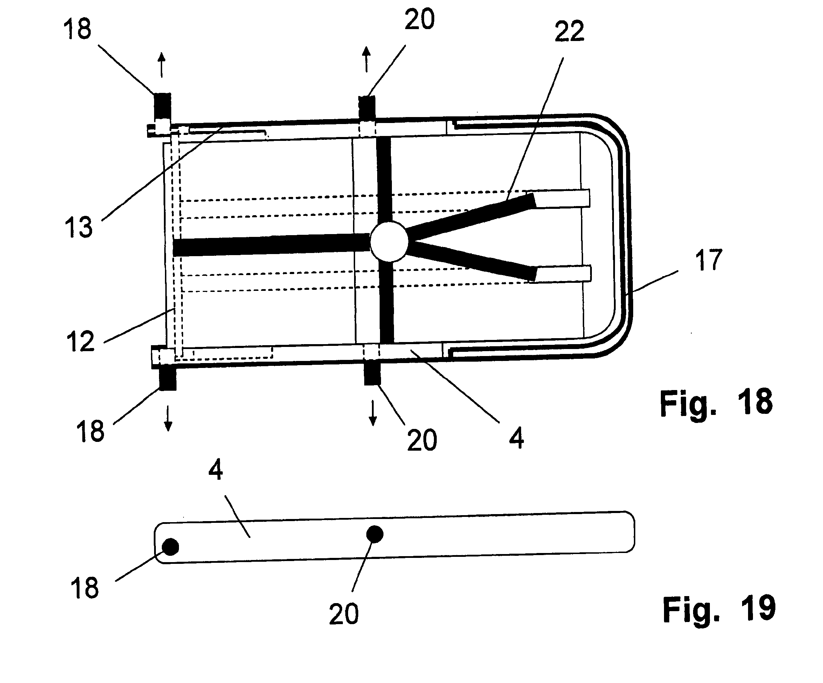

Bei dem in den Fig. 15 bis 19 gezeigten erfindungsgemäßen Sitzsystem ist der Reboard-Sitzbügel 4 lösbar mit dem Sitz 2, 3 verbunden. Wenn der Reboard-Sitzbügel 4 vom Sitz 2, 3 getrennt ist (Figuren 18 und 19) kann er an geeigneter Stelle verstaut werden. Da der Reboard-Sitzbügel 4 nicht in die Rückenlehne 3 integriert ist, kann der Sitz 2, 3 dann ohne jegliche Beeinträchtigung des Sitzkomforts genutzt werden.

Der Reboard-Sitzbügel 4 umfasst zwei Lagerbolzen 18, die in axialer Richtung gegen eine Federkraft im Reboard-Sitzbügel 4 versenkt werden können. Um den Reboard-Sitzbügel 4 mit dem Sitz 2, 3 zu verbinden, wird der Reboard-Sitzbügel 4 mit versenkten Lagerbolzen 18 zwischen Lagerschalen 19 des Sitzes 2, 3 positioniert. Die Lagerbolzen 18 gleiten unter der Federkraft in die Lagerschalen 19 und bilden ein Schwenklager zwischen dem Reboard-Sitzbügel 4 und dem Sitz 2, 3.

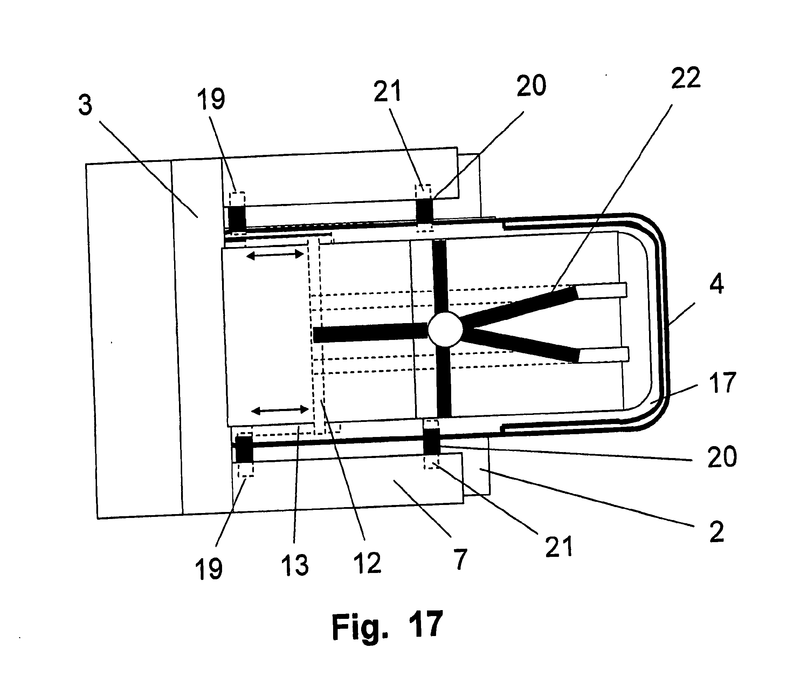

Um den Reboard-Sitzbügel 4 in den in Fig. 15 gezeigten Reboard-Nutzzustand zu bringen, werden zusätzlich Haltebolzen 20 in Haltebohrungen 21 der Armlehnen 7 eingeführt, siehe Fig. 17. Wenn die Haltebolzen 20 eingerastet sind, ist der Reboard-Sitzbügel 4 gegenüber Kräften aus allen Richtungen fixiert.

Im Reboard-Nutzzustand ist der untere Teil 11 des Polsters 8, 11 so in dem Langloch 13 positioniert, dass das Polster 8, 11 eine Sitzmulde bildet, in der das Kleinkind sitzen kann. Um den Reboard-Sitzbügel in den Liegezustand zu bringen, wird das untere Teil 11 des Polsters 8, 11 so in dem Langloch 13 verschoben, dass das Polster 8, 11 parallel zu dem Sitzbügel 4 ausgerichtet ist. Dann werden die Haltebolzen 20 aus den Haltebohrungen 21 herausgelöst, so dass der Reboard-Sitzbügel 4 geschwenkt werden kann und auf der Sitzfläche 2 abgelegt werden kann. Das Polster 8, 11 bildet eine ebene Fläche, auf der das Kleinkind liegen kann.

## Patentansprüche

1. Reboard-Sitzbügel für einen Sitz eines Verkehrsmittels, mit einem von dem Reboard-Sitzbügel (4) gehaltenen Polster (8, 11), das einen oberen Teil (8) und einen unteren Teil (11) umfasst, wobei der obere Teil (8) des Polsters (8, 11) schwenkbar mit einem oberen Bereich des Reboard-Sitzbügels (4) verbunden ist, wobei die beiden Teile des Polsters (8, 11) schwenkbar miteinander verbunden sind und wobei der untere Teil (11) des Polsters verschieblich mit dem unteren Bereich des Reboard-Sitzbügels (4) verbunden ist, **dadurch gekennzeichnet, dass** der untere Teil (11) des Polsters (8, 11) in verschiedenen Stellungen fixierbar ist, wobei die vorschiedenen Stellungen einen Reboard-Nutzzustand und einen Liegezustand umfassen.

2. Reboard-Sitzbügel nach Anspruch 1, **dadurch gekennzeichnet, dass** er ein Verbindungsmittel (18) zum Herstellen einer lösbaren Verbindung mit dem Sitz (2, 3) umfasst.

3. Reboard-Sitzbügel nach Anspruch 2, **dadurch gekennzeichnet, dass** die Verbindung zwischen dem Reboard-Sitzbügel (4) und dem Sitz (2,3) zugleich ein Schwenklager (18, 19) bildet.

4. Reboard-Sitzbügel nach Anspruch 2 oder 3, **dadurch gekennzeichnet, dass** er einen Lagerbolzen (18) zum Herstellen der Verbindung mit dem Sitz (2, 3) umfasst.

5. Reboard-Sitzbügel nach Anspruch 4, **dadurch gekennzeichnet, dass** der Lagerbolzen (18) gegen eine Federkraft im Reboard-Sitzbügel (4) versenkbar ist.

6. Reboard-Sitzbügel nach einem der Ansprüche 1 bis 5, **dadurch gekennzeichnet, dass** er im Wesentlichen U-förmig ausgebildet ist.

7. Reboard-Sitzbügel nach einem der Ansprüche 1 bis 6, **dadurch gekennzeichnet, dass** er ein Halteelement umfasst zum Überleiten von Kräften auf den Sitz (2, 3) oder auf ein in fester räumlicher Beziehung zu dem Sitz (2, 3) stehendes Element.

8. Reboard-Sitzbügel nach Anspruch 7, **dadurch gekennzeichnet, dass** das Halteelement einen Haltebolzen (20) umfasst.

9. Reboard-Sitzbügel nach einem der Ansprüche 1 bis 8, **dadurch gekennzeichnet, dass** das Polster (8, 11) beidseitig gepolstert ist.

10. Reboard-Sitzbügel nach einem der Ansprüche 1 bis 9, **dadurch gekennzeichnet, dass** das Polster (8, 11) einen im wesentlichen starren Kern aufweist.

11. Reboard-Sitzbügel nach einem der Ansprüche 1 bis 10, **dadurch gekennzeichnet, dass** er Fixiereinrichtungen für einen Beckengurt des Sitzes (2, 3) aufweist.

12. Reboard-Sitzbügel nach einem der Ansprüche 1 bis 11, **dadurch gekennzeichnet, dass** er einen ausfahrbaren Sichtschutz (17) umfasst.

13. Reboard-Sitzbügel nach einem der Ansprüche 1 bis 12, **dadurch gekennzeichnet, dass** er einen Gurt (22) zum Sichern der Kinder umfasst.

## Claims

1. Reboard seat frame for a seat of a means of transport, with a cushion (8, 11) which is supported by the reboard seat frame (4) and comprises an upper part (8) and a lower part (11), wherein the upper part (8) of the cushion (8, 11) is pivotably connected to an upper region of the reboard seat frame (4), wherein the two parts of the cushion (8, 11) are pivotably interconnected, and wherein the lower part (11) of the cushion is displaceably connected to the lower region of the reboard seat frame (4), **characterized in that** the lower part (11) of the cushion (8, 11) is fixable in different positions, wherein the different positions comprise a reboard in-use position and a reclined position.

2. Reboard seat frame according to Claim 1, **characterized in that** it comprises a connecting means (18) for producing a releaseable connection to the seat (2, 3).

3. Reboard seat frame according to Claim 2, **characterized in that** the connection between the reboard seat frame (4) and the seat (2, 3) forms a pivot bearing (18, 19) at the same time.

4. Reboard seat frame according to Claim 2 or 3, **characterized in that** it comprises a bearing bolt (18) for producing the connection to the seat (2, 3).

5. Reboard seat frame according to Claim 4, **characterized in that** the bearing bolt (18) is lowerable counter to a spring force in the reboard seat frame (4).

6. Reboard seat frame according to one of Claims 1 to 5, **characterized in that** it is formed substantially in the shape of a U.

7. Reboard seat frame according to one of Claims 1 to 6, **characterized in that** it comprises a retaining element for transmitting forces to the seat (2, 3) or to an element in a fixed spatial relationship with the seat (2, 3) .

8. Reboard seat frame according to Claim 7, **characterized in that** the retaining element comprises a retaining bolt (20).

9. Reboard seat frame according to one of Claims 1 to 8, **characterized in that** the cushion (8, 11) is padded on both sides.

10. Reboard seat frame according to one of Claims 1 to 9, **characterized in that** the cushion (8, 11) has a substantially rigid core.

11. Reboard seat frame according to one of Claims 1 to 10, **characterized in that** it has fixing devices for a lap belt of the seat (2, 3).

12. Reboard seat frame according to one of Claims 1 to 11, **characterized in that** it comprises an extendable view guard (17).

13. Reboard seat frame according to one of Claims 1 to 12, **characterized in that** it comprises a belt (22) for securing the children.

## Revendications

1. Armature de siège pour installation dans le sens opposé au sens de la marche destinée à un siège d'un moyen de transport, comprenant un rembourrage (8, 11) maintenu par l'armature de siège pour installation dans le sens opposé au sens de la marche (4), lequel rembourrage comporte une partie supérieure (8) et une partie inférieure (11), la partie supérieure (8) du rembourrage (8, 11) étant reliée de manière pivotante à une zone supérieure de l'armature de siège pour installation dans le sens opposé au sens de la marche (4), les deux parties du rembourrage (8, 11) étant reliées entre elles de manière à pouvoir pivoter et la partie inférieure (11) du rembourrage étant reliée à la zone inférieure de l'armature de siège pour installation dans le sens opposé au sens de la marche (4), de manière à pouvoir être déplacée par coulissement, **caractérisée en ce que** la partie inférieure (11) du rembourrage (8, 11) peut être fixée dans différentes positions, les différentes positions comportant un état d'utilisation dans le sens opposé au sens de la marche et un état d'utilisation en position couchée.

2. Armature de siège pour installation dans le sens opposé au sens de la marche selon la revendication 1, **caractérisée en ce qu'**elle comporte un moyen de liaison (18) servant à établir une liaison amovible avec le siège (2, 3).

3. Armature de siège pour installation dans le sens opposé au sens de la marche selon la revendication 2, **caractérisée en ce que** la liaison forme en même temps un support pivotant (18, 19) entre l'armature de siège pour installation dans le sens opposé au sens de la marche (4) et le siège (2, 3).

4. Armature de siège pour installation dans le sens opposé au sens de la marche selon la revendication 2 ou 3, **caractérisée en ce qu'**elle comporte un pivot (18) servant à établir la liaison avec le siège (2, 3).

5. Armature de siège pour installation dans le sens opposé au sens de la marche selon la revendication 4, **caractérisée en ce que** le pivot (18) est escamotable contre une force de rappel dans l'armature de siège pour installation dans le sens opposé au sens de la marche (4).

6. Armature de siège pour installation dans le sens opposé au sens de la marche selon l'une quelconque des revendications 1 à 5, **caractérisée en ce qu'**elle est réalisée essentiellement de manière à présenter la forme d'un U.

7. Armature de siège pour installation dans le sens opposé au sens de la marche selon l'une quelconque des revendications 1 à 6, **caractérisée en ce qu'**elle comporte un élément de maintien pour transférer des forces sur le siège (2, 3) ou sur un élément se tenant à la verticale dans une relation spatiale fixe par rapport au siège (2, 3).

8. Armature de siège pour installation dans le sens opposé au sens de la marche selon la revendication 7, **caractérisée en ce que** l'élément de maintien comporte un boulon de maintien (20).

9. Armature de siège pour installation dans le sens opposé au sens de la marche selon l'une quelconque des revendications 1 à 8, **caractérisée en ce que** le rembourrage (8, 11) est rembourré des deux côtés.

10. Armature de siège pour installation dans le sens opposé au sens de la marche selon l'une quelconque des revendications 1 à 9, **caractérisée en ce que** le rembourrage (8, 11) présente une partie centrale essentiellement rigide.

11. Armature de siège pour installation dans le sens opposé au sens de la marche selon l'une quelconque des revendications 1 à 10, **caractérisée en ce qu'**elle présente des dispositifs de fixation pour une ceinture ventrale du siège (2, 3).

12. Armature de siège pour installation dans le sens opposé au sens de la marche selon l'une quelconque des revendications 1 à 11, **caractérisée en ce qu'**elle comporte un dispositif escamotable de protection contre les regards (17).

13. Armature de siège pour installation dans le sens opposé au sens de la marche selon l'une quelconque des revendications 1 à 12, **caractérisée en ce qu'**elle comporte une ceinture (22) de sécurité pour les enfants.
